(19) Europäisches Patentamt
European Patent Office
Office européen des brevets

(11) **EP 2 693 164 A1**

(12) **EUROPEAN PATENT APPLICATION**

(43) Date of publication:
**05.02.2014 Bulletin 2014/06**

(51) Int Cl.:
**G01B 9/02** *(2006.01)*　　　**G01N 21/45** *(2006.01)*

(21) Application number: **12382317.1**

(22) Date of filing: **03.08.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Universidad Politécnica de Madrid**
**28040 Madrid (ES)**

(72) Inventors:
• **Holgado Bolaños, Miguel**
**28031 Madrid (ES)**

• **Sanza Gutierrez, Francisco Javier**
**28031 Madrid (ES)**
• **Lagunas Heras, María Fe**
**28031 Madrid (ES)**
• **Lavin Hueros, Alvaro**
**28031 Madrid (ES)**
• **Casquel del Campo, Rafael**
**28031 Madrid (ES)**

(74) Representative: **ABG Patentes, S.L.**
**Avenida de Burgos, 16D**
**Edificio Euromor**
**28036 Madrid (ES)**

(54) **Interferometric detection method**

(57)　The present invention is an interferometric detection method which allows improving the limit of detection and taking interferometric measurements with a much higher degree of sensitivity than that allowed by interferometric devices known in the state of the art. The invention is characterized by the use of two interferometric measurements, a first reference measurement in a wavelength range and a second measurement on the observation region in at least the same wavelength range in which it is to be determined whether or not there are changes, where a quotient function, which is the function to be analyzed for establishing parameters determining the change experienced in the observation region with a high degree of sensitivity, is constructed from said measurements.

FIG.17

**Description**

Object of the Invention

The present invention is an interferometric detection method which allows improving the limit of detection and taking detection measurements with a higher degree of sensitivity than that allowed by the simple use of interferometric devices known in the state of the art; it is furthermore simpler and more robust.

The invention is characterized by the use of two interferometric measurements which allow the optical reading system to convert the changes in wavelength (also in incident angle) caused by optical transduction into a unique variable detection. Therefore, two interferometric measurements are used, a first interferometric reference measurement in a wavelength range and a second measurement on the observation region in at least the same wavelength range in which it is to be determined whether or not there are changes, where a transduction function, which is the function to be analyzed for establishing parameters determining with a high degree of sensitivity the change experienced in the observation region, is constructed from said measurements.

The two interferometric measurements allow the optical reading system to convert the changes in wavelength (and in incident angle) caused by optical transduction into a unique variable detection. The method is therefore an alternative to the methods of the state of the art as it allows eliminating dispersive elements in wavelength (also in incident angle) in the transduction system. In fact, it is possible for the optical measurement system according to embodiments of the invention can operate as if its resolution in wavelength were infinite.

Background of the Invention

One of the fields of the art that has experienced heavy development is the field of biosensors, and specifically the field of cell-based biosensors, for example, for detecting specific proteins or analytes.

In this field of the art, detection is performed using interferometric techniques. Detection is carried out on a surface which is treated such that it is functionalized by incorporating molecular receptors, where these molecular receptors are suitable for establishing chemical bonds and reacting with the target molecule. Once the surface is functionalized, the analyte or sample that is to be checked to see if it contains the target molecule is incorporated on the functionalized surface. If the sample contains the target molecule, the molecule is trapped in one of the receptors located on the surface of the observation region.

Once the surface is functionalized, it volume increases as its height increases due to the presence of the molecular receptors. When these molecular receptors recognize a target molecule, the volume further increases due to the increase in height of the biological layer on the functionalized surface.

The increases in height of the surface due to functionalization and due to the existence of molecules fixed to the receptors is in the nanometric order, depending on the size of the biomolecules in question, the characteristic length of the receptors and of the molecules bound to said receptors.

The detection of a correct surface functionalization or the detection of the presence of the target molecules in the sample is a highly complex technical problem given the very small scales involved in the processes of incorporating molecular receptors and fixing molecules by means of said molecular receptors. In the state of the art there are many examples which use these biofunctionalization and recognition techniques on various materials such as materials, such as gold (e.g. devices based on SPR), oxides and Si (e.g. integrated biosensors based on Young interferometers, Mach-Zehnder interferometers, resonating rings and discs, etc.) and polymeric materials (micro-nanopillar arrays or pillars with SU-8 resin, among others).

Many interferometric techniques are known in the state of the art, such as those mentioned which allow observing the surface changes of an observation region where such techniques are based on the principles described below, using for example one of the simplest interferometers known, the March-Zehnder interferometer.

The Mach-Zehnder interferometer uses an input light beam $I_{in}$ which is in turn split into two beams $I_1$, $I_2$, separated according to two different trajectories, a first trajectory and a second trajectory. After following these two trajectories, the beams are again united (joined together) leading to an output beam $I_{out}$.

If both light beams follow a trajectory of the same length and their trajectory does not experience changes, such as changes due to variation of the refractive index on the material in which they are propagated for example, which mainly entail a phase difference in one of the trajectories, the light resulting from combining the two beams has the same intensity as the input light $I_{out} = I_1 + I_2 = I_{in}$.

The operating principle of the interferometer consists of one of the beams interacting with the observation region such that the presence of surface elements in the observation region, for example, modifies the trajectory traveled by said beam. The origin of both beams is the same such that both, before the bifurcation splitting them are in-phase. Given that one of the beams travels a different length than the beam or travels that length with a different refractive index, when both beams are combined, they are combined with a phase difference. The combination of the two beams is a sum the result of which depends on the phase difference of the undulating electric fields making up both light beams. When this phase difference is zero, it allows re-forming the original beam, when the value is $\pi$, they cancel each other out; and any intermediate situation leads to a light beam with a reduced intensity with respect to the input intensity and is function of the optical path of one of the beams which in turn is a function of the length traveled by the light beam and the refractive index.

These variations in intensity allow determining if the observation surface has experienced any change, such as due to the adsorption of biological material for example.

Nevertheless, these changes and the signal obtained at the output have limited sensitivity. Additionally, most interferometers of this type can only be manufactured on planar technology and biochips based on input and output waveguides, which makes them more complex in terms of their optical interrogation and light coupling, packaging, and shows to be very complicated when attempting to manufacture them for vertical optical interrogation systems where multi-parametric detection from the integration in biosensitive cells is simpler and the analyte quantity in volume is lower and less critical.

Description of the Invention

The present invention provides a method and device overcoming the limitations indicated in the state of the art by combining two interferometric readings as established in claim 1 and allows obtaining signals with a much higher sensitivity than that which is provided by a single interferometric device of the state of the art by itself.

A first aspect of the invention is an interferometric detection method comprising the following steps:

a) taking a first interferometric measurement by means of an interferometer in turn comprising an observation region, where said interferometer is suitable for receiving an input light beam and provides an output beam resulting from interrogating the observation region, where said first interferometric measurement is taken by exciting the interferometer with a light beam which is at least in a wavelength range $[\lambda_1, \lambda_2]$,

The observation region is a region susceptible to experiencing a change in the refractive index due to an interferometric experiment. In most of the embodiments described below, where a Fabry-Perot interferometer has been used for the sake of simplicity, the observation region is a surface region susceptible to experiencing changes, for example due to its functionalization by incorporating molecular receptors or because, already having incorporated molecular receptors, it has been used providing a sample susceptible to containing target molecules.

In this first step an interferometric experiment is conducted on the observation region by providing an input light beam in a wavelength range identified as $[\lambda_1, \lambda_2]$. The values $\lambda_1$ and $\lambda_2$ are values selected before starting the experiment. The interferometric measurement can be taken with monochromatic light the wavelength of which has values in said range, or by means of polychromatic light containing a spectrum in at least the range $[\lambda_1, \lambda_2]$,

b) characterizing the observation region of the interferometer by means of a function $I_{Ref}^{Interferometric}[\lambda_1, \lambda_2]$,

which represents the measured intensity modulated by the reference interferometer, or in other words, which represents the output of the interferometer as a function of the exciting light beam wavelength,

The output light beam is characterized by means of a function which represents the intensity in the range $[\lambda_1, \lambda_2]$ which is referred to as interferometric measurement and which relates to the resulting output intensity as the latter is modulated by an interferometer. The usually manner of carrying out this characterization is by means of measuring the intensity in said wavelength range which allows providing the characterizing function $I_{Ref}^{Interferometric}[\lambda_1, \lambda_2]$,

c) conducting an experiment susceptible to modifying the observation region or on the observation region of the interferometer used in the first measurement or on a second observation region interferometrically equivalent to the first observation region,

d) taking a second interferometric measurement by characterizing the modified observation region of the interferometer during the experiment by means of a function $I_{out}^{Interferometric}[\lambda_1, \lambda_2]$, which represents the measured intensity modulated by the interferometer at the output of the interferometer as a function of the exciting light beam wavelength, where in this second interferometric measurement the exciting light beam shows the same spectrum as the exciting light used in the first measurement in at least the wavelength range,

A second measurement is taken in the same conditions as the first measurement but this measurement is taken on the modified observation region because an experiment susceptible to modifying the observation region has been conducted.

It has already been discussed that an experiment susceptible to modifying the observation region is, for example, placing a sample in which it is to be determined whether it contains a target molecule on the surface of the interferometer.

The first interferometric measurement and the second interferometric measurement can be taken sequentially or in parallel. If taken in parallel, the observation region is physically different but it is interpreted that it is the same given the equivalence of the interferometric properties; i.e., the interferometric properties of the region used in both measurements are such that given the same excitation by means of the incident light beam, the same response is provided in the output beam before conducting the experiment on said observation region.

In order for the exciting light in both experiments to have the same spectrum in at least the wavelength range $f_{trans}$, by way of example, the simplest thing to do is to use the same light source splitting the light beam into two beams.

e) constructing a transduction function $f_{trans}$ as a result of the quotient:

$$f_{trans}[\lambda_1, \lambda_2] = \frac{I_{out}^{Interferometric}[\lambda_1, \lambda_2]}{I_{Ref}^{Interferometric}[\lambda_1, \lambda_2]}$$

Analyzing the transduction function allows establishing a measurement of the degree of change in the observation region of the second measurement. If the interferometric measurements use light, according to the embodiments the transduction function can be mathematically represented in a processing unit after having transformed the output light beams into numerical values representing the wavelength-dependent intensity.

f) establishing a measurement parameter on function $f_{trans}$ to determine the degree of modification of the observation region, preferably among the following:

○ the amplitude of one of the peaks of function $f_{trans}$, preferably corresponding to the smaller wavelength,
○ the amplitude between two consecutive peaks of function $f_{trans}$,
○ the change in slope in function $f_{trans}$ by a pre-established wavelength value; or,
○ the variation of the area under the curve $f_{trans}[\lambda_a, \lambda_b]$, where the range $[\lambda_a, \lambda_b]$ is a sub-range of $[\lambda_1, \lambda_2]$,,

The degree of change experienced due to the interferometric experiment can be measured in different ways from the transduction function. In fact, after having carried out the invention a first time, establishing which measurement parameter is the most suitable for determining the degree of change of the transduction function and therefore the degree of modification of the observation region, repetition of the experiment in successive tests can do away with assessing the intensity at the output (and therefore the transduction function as well) in all the values of the range $[\lambda_1, \lambda_2]$ by measuring only in those points of the domain relevant for the pre-established measurement parameter. According to this embodiment, the steps of the invention are carried out integrally at least at the time of designing an experiment which can subsequently be repetitive but where the measurement range can be reduced.

Likewise, in the event of repeating second measurements for different interferometric experiments, the same first reference measurement can be used. Nevertheless, the reference measurement should periodically be retaken in case the device responsible for carrying out the method according to the invention requires calibration. g) providing the value of the measurement parameter measured on function $f_{trans}$ obtained in step f).

According to one embodiment, this value can be shown in a display screen or by means of a connection line provided with a signal proportional to the value of said parameter.

A second aspect of the invention is a device suitable for carrying out an interferometric detection method according to the method of claim 1. Both aspects of the invention as well as various examples of carrying out the invention will be described below in greater detail in reference to the drawings.

Description of the Drawings

These and other features and advantages of the invention will be more clearly understood from the following detailed description of a preferred embodiment given only by way of illustrative and non-limiting example in reference to the attached drawings.

Figure 1 shows an operating scheme of an interferometer from the state of the art.
Figures 2a, 2b and 2c show the amplitudes of the electric field in two beams which are combined at the output of an interferometer when said beams have a phase difference of 0, n or an intermediate value between these values. Figure 3 Figure shows function $I_s(\lambda)$, intensity at the output of the interferometer, where said function is wavelength-dependent.

Figure 4 schematically shows a Fabry-Perot interferometer from the state of the art based on a single interferometric layer formed by a first substrate and a second substrate, where the refractive indices of both substrates are different.

Figure 5 schematically shows the interferometer of Figure 4 with the upper surface functionalized by means of incorporating bioreceptors.

Figure 6 schematically shows the interferometer of Figure 5 where the bioreceptors are shown bound to a molecule.

Figure 7 depicts the three wavelength-dependent intensity functions corresponding to the embodiments shown in Figures 4, 5 and 6, respectively.

Figure 8 shows the quasilinear performance of the response signal in an interferometer like the one described for the cases described according to Figures 4 to 7.

Figure 9 shows the composition of functions $I_{ref}^{Interferometric}[\lambda_1, \lambda_2]$ and $I_{out}^{Interferometric}[\lambda_1, \lambda_2])$ for obtaining transfer function $f_{trans}$.

Figure 10 shows a transduction function $f_{trans}[\lambda_1, \lambda_2]$ obtained in a set of experiments conducted on an interferometer according to one embodiment where the results correspond to sheets of biofilm with increasing thickness.

Figure 11 shows the amplitude between the first two peaks of the transfer function measured in a set of experiments using an interferometer like the one schematically shown in Figure 10 depending on the concentration of biomolecules recognized by means of a receptor having dimensions comparable to the measurement of the thickness of the biofilm on the sensitive surface.

Figures 12a-d show examples of different types of interferometric cells for the interrogation or vertical optical reading of observation regions located on different interferometers.

Figure 13 schematically shows a device according to a first embodiment which is suitable for performing detection according to the first aspect of the invention.

Figure 14 shows the reference values used in each of the first three parameters that are used for providing a signal proportional to the change in the observation region.

Figure 15 shows the area under the curve variation $f_{trans}[\lambda_a, \lambda_b]$ where reference in this case is made to the value of 1.

Figure 16 schematically shows a device according to a second embodiment which is suitable for performing detection according to the first aspect of the invention.

Figures 17 schematically shows a device according to a third embodiment which generalizes the particular examples seen above, where in this case it is not necessary to use dispersive elements like in the first example of Figure 13 (in wavelength) or in the second example of Figure 16 (in incident angle).

Figures 18a, 18b, 18c, 18d show the spectral responses in intensity in different components of this third embodiment, as well as the power associated with the described cases.

Figure 19 schematically shows the response curve of the sensor represented by the power of function $f_{trans}$ as a function of the thickness of the biofilm or the concentration of biomolecules.

Figure 20 schematically shows an embodiment where the method of transduction described in the preceding example is suitable for biochips manufactured in planar technology using interferometers or resonators.

<u>Detailed Description of the Invention</u>

According to the first aspect of the invention, the present invention is an interferometric transduction method suitable for establishing whether there have been changes in a sensitive surface of an interferometer, for example in surfaces of cell-based biosensors for biodetection. Nevertheless, the invention is not confined to this application because it can be applied for example to the detection of surface changes such as those resulting from surface by means of deposition, polishing, etc.

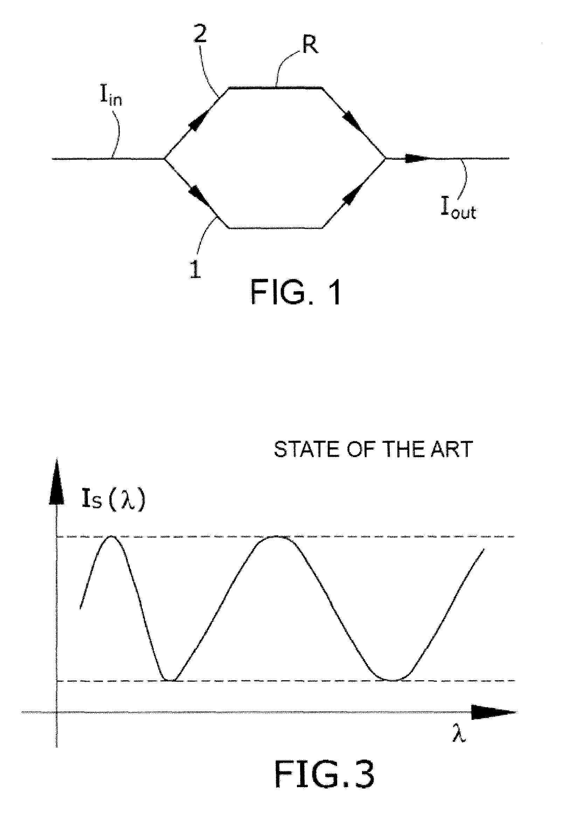

Figure 1 shows an operating scheme of an interferometer. An incident light beam with an intensity $I_{in}$ split into a first trajectory (1) and a second trajectory (2) is represented on the left. In particular, the second trajectory (2) passes through the observation region (R) such that, given the modification of said observation region (R), the optical path traveled by the light following this second trajectory (2) is altered, for example, by the existence of a layer of molecular receptors.

When both beams reach the output, given that the beam that followed the second trajectory (2) has traveled a different path, the composition has a phase difference.

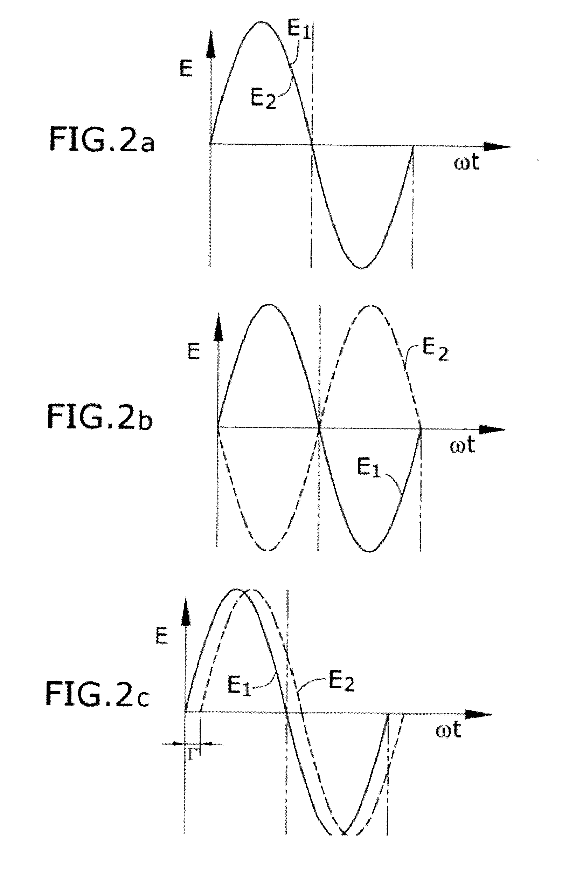

Figures 2a, 2b and 2c show a sequence of three graphs where two undulating functions are represented in each, those corresponding to the electric field ($E_1$, $E_2$) of the beam following the first trajectory (1) and those of the beam following the second trajectory (2) after reaching the point where both beams are combined.

Figure 2a shows the electric fields ($E_1$, $E_2$) in-phase and therefore the sum of the fields leads to a maximum resulting beam intensity. If the phase difference is referred to as , in this case $\Gamma = 0$.

Figure 2b shows a phase difference $\Gamma = \pi$, so the electric fields ($E_1$, $E_2$) mutually cancel one another out and the result is the absence of signal. Nil intensity.

Figure 2c shows an intermediate case where the intensity is modified by said phase difference.

The path traveled by the light has been mentioned. The following relations are considered for presenting some terminology that will be used below:

$$v = \frac{c}{n} = \frac{L}{t}$$

where $v$ is the speed of light propagation in a specific medium, $c$ is the speed of light in a vacuum, $L$ is the refractive index of the light in said medium, is the length traveled and $t$ the time invested in said travel.

From this relation, it can be deduced that

$$nL = ct = \frac{\lambda}{T} t$$

where $\lambda$ is the wavelength and $T$ the period. From this expression, where $\omega$ is the angular frequency,

$$\omega nL = \frac{\lambda}{T} \omega t = \frac{\lambda}{T} \Gamma$$

with $\Gamma = \omega t$. Given that the angular frequency $\omega$ can be written depending on the frequency $f$ as $\omega = 2\pi f$, then

$$\Gamma = \frac{2\pi}{\lambda} nL$$

since $\Gamma$ is the phase difference angle, the product $nL$ will be referred to as the optical path. Therefore,

$$\Gamma = \Gamma(\lambda, nL)$$

where this notation indicates that the phase difference is a function of the wavelength and the optical path.

Going back to the interferometer, in order for there to be destructive interference the causes can be:

- there is a change in wavelength $\lambda$ in both trajectories, a situation that is not possible in the scenario described because the light beams come from the same input beam; and,
- the optical path changes either because of the change in the refractive index $n$ or the change in $L$ in one of the trajectories.

In the simplest case to analyze, the input light is monochromatic. Nevertheless, the input light can be multiwavelength and therefore one analysis such as that considered could be performed for each wavelength. In fact, a multiwavelength input light beam within a specific wavelength range will be used in most of the embodiments of the invention.

To determine the phase difference between two trajectories having two different optical paths the following applies

$$\Delta\Gamma = \frac{2\pi}{\lambda}\left(n_1 L_1 - n_2 L_2\right)$$

where subscripts 1 and 2 indicate the media through which both trajectories pass.

If the interferometer is symmetrical, the two trajectories have the same length and the expression on the right is simplified as follows

$$\Delta\Gamma = \frac{2\pi}{\lambda}\left(n_1 - n_2\right) = cte\,\Delta n$$

$\Delta n$ being the refractive index variation. For example the change in refractive index in a biosensor is due to the presence of a biomolecular film on the observation region (R). This change in refractive index in only one of the trajectories of the interferometer causes a change in the output signal which turns out to be sensitive to changes in the refractive index.

If a polychromatic beam (several wavelengths) is introduced in the input light beam instead of introducing a single wavelength, then for each wavelength there is a signal resulting from the interference (interferometric signal) which depends on said wavelength $I_s = I_s(\lambda)..$

Figure 3 shows the typical function $I_s(\lambda)$ generated by a simple Fabry-Perot interferometer based on an interferometric film where it is found that though it is oscillating, it is not necessarily a sine function and its oscillation frequency is reduced for increasing values of $\lambda$.

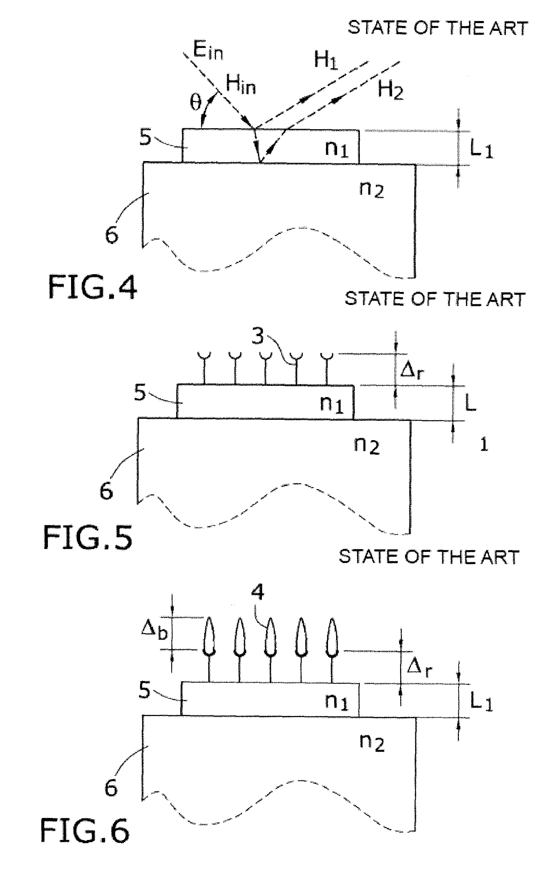

Figure 4 shows an embodiment of an interferometer known in the state of the art. In this case, a Fabry-Perot interferometer has been chosen due to its simplicity and the possibility of being vertically interrogated, and because it is conceptually equivalent to the one described in Figure 1. The interferometer has a first substrate (5) with a refractive index $n_1$ located on a second substrate (6) with a refractive index $n_2$.. The incident light beam ($H_{in}$)), with a specific angle of inclination, strikes the upper surface of the first substrate (5). Part of the light is reflected ($H_1$) and part of the light is refracted, this refracted part traveling through the material of the first substrate (5). Once this refracted light is reflected on the interphase with the second substrate (6) and once it again reaches the free upper surface of the first substrate (5), it is refracted ($H_2$) traveling parallel to the first reflected beam ($H_1$) but out-of-phase due to the different optical path resulting from the refraction. Therefore, by comparison with the interferometer of the state of the art described in Figure 1, the first beam ($H_1$) can be considered the reference branch, and the second beam ($H_2$) can be considered the second branch, and therefore by simply combining two materials, an interferometer is provided that in functional terms is like the one schematically depicted in Figure 1 and allows being optically interrogated in a vertical manner. The optical path of this second beam ($H_2$) is a function of the height or thickness ($L_1$) of the first substrate (5) and also of the inclination $\theta$ of the incident beam ($H_{in}$).

Although the second beam ($H_2$) comes from the described trajectories, a considerably smaller part of the light experiences additional reflections and refractions reducing the energy of this second beam ($H_2$) which again comes out of the first substrate (5).

As shown in Figure 5, the surface of the first substrate (5) can be functionalized by incorporating receptors (3) capable of recognizing specific molecules (4). It is understood that a receptor (3) recognizes a molecule (4) when the receptor is capable of establishing a linking bond with the molecule (4). The *in vitro* detection process in the state of the art is characterized by a bioreceptor recognizing a specific target molecule, usually in direct testing the biorecetor is an antibody (Ab) which specifically recognizes an antigen (Ag), and in indirect testing the Ag acts like a bioreceptor detecting a specific Ab. When this affinity reaction is detected directly as in the case of this invention, the change in specific physical properties without using any type of labels or markers (fluorescent, radioactive, etc), detection is referred to as label-free.

The presence of these receptors (3) increases the height $\Delta r$, modifying the optical path of the first substrate (5). The same occurs when a sample to be analyzed is incorporated on this functionalized surface on which the receptors (3) have been immobilized and said sample has molecules (4) which are fixed to the surface by the recognition reaction of the immobilized receptors (3). When the initially deposited sample is cleaned off the first substrate (5), if said sample contained molecules that are recognized by the receptors (3) present on the surface of the first substrate (5), a surface like that shown in Figure 6 is then obtained, said figure showing the molecules (4) recognized by the receptors (3) in turn increasing the height in $\Delta b$.

As indicated, the existence of receptors (3) on the surface of the first substrate (5) is interpreted as an increase in the height originally defined by the thickness $L_1$ of the first substrate (5) in an increase $\Delta r$ equivalent to the thickness of a biofilm leading to a change in the optical path of this first substrate (5). Likewise, the molecules (4) recognized by the receptors (3) are interpreted by means of a greater increase in height by a quantity $\Delta r + \Delta b$ and therefore also modify the optical path.

In both cases, it is said that it "is interpreted as an increase" because there is a biochemical of association and dissociation reaction between the (bio)receptor (3) and the target molecule (4), reaching an equilibrium in which it can be assumed that there is an equivalent thickness leading to a modification of the average optical path.

The phase difference without surface functionalization is therefore

$$\Delta\Gamma_1 = \frac{2\pi}{\lambda} n_1 L_1$$

If the receptors are added to the surface, the phase difference can be determined as

$$\Delta\Gamma_2 = \frac{2\pi}{\lambda}(n_1 L_1 + n_{\Delta r} L_{\Delta r})$$

Finally, if the receptor surface is considered with the molecules anchored on said receptors, then the phase difference is determined as

$$\Delta\Gamma_3 = \frac{2\pi}{\lambda}(n_1 L_1 + n_{\Delta r} L_{\Delta r} + n_{\Delta b} L_{\Delta b})$$

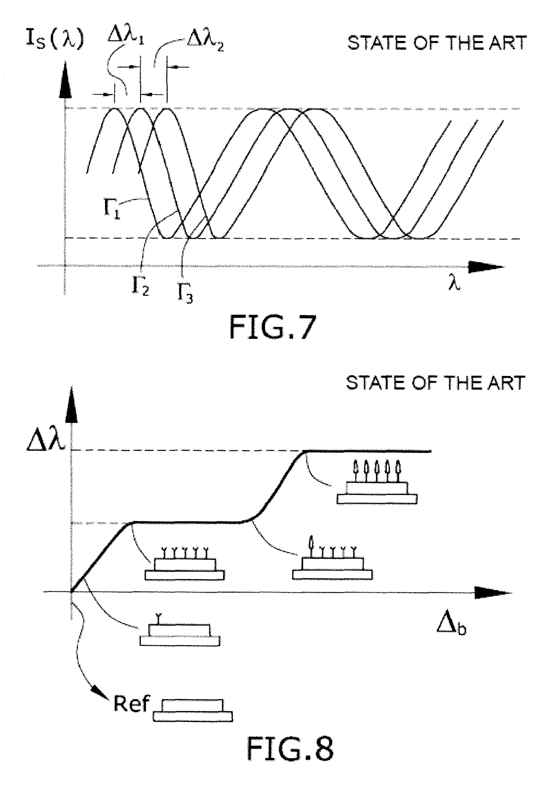

Figure 7 shows the curves $I_s(\lambda)$ for the three cases where a progressive elongation is observed, which is translated into a shift towards a greater wavelength as the refractive index or the thickness of each of the curves increases. Considering the first peak of each curve, there is an increase of $\Delta\lambda_1$ in the curve measured when the surface of the first substrate (5) has been functionalized and an additional increase $\Delta\lambda_2$ when there are molecules (4) fixed in the receptors (3).

When the degree of surface functionalization is measured with the interferometer determining the degree of shift in $\lambda$ of the curve $I_s(\lambda)$, or on an already functionalized surface, the concentration of molecules (4) recognized by the receptors (3) is measured, also observing the shift in $\lambda$ of the corresponding curve $I_s(\lambda)$; it is observed that this shift has an approximately linear response with respect to the variable measurement and generally monotonically increasing until the surface is saturated with either bioreceptors (3) (immobilization process) or with target molecules (4) (recognition process), the response curve generally being sigmoidal.

Figure 8 shows a response curve in $\Delta\lambda$ vs. the increase of the thickness of the first substrate (5) taking the surface of the first substrate without additional elements on its surface as a reference.

The first growth sector shows the increase of receptors (3) immobilized on the surface until reaching saturation. The next increasing sector corresponds to an increase in the concentration of target molecules (4) recognized by accumulated receptors (3). This curve reaches saturation when all the receptors (3) have recognized the target molecules (4).

An advantage of the method according to the invention is not only that it can improve sensitivity by operating with interferometric signals, but rather it allows handling interferometric signals without needing to use dispersive elements (e.g. wavelength analyzers or lenses with a high numerical aperture) making the method much simpler and more robust.

One of the most advantageous ways of applying the method according to the invention after the transduction function has been constructed is to operate in a specific wavelength where said transduction function is known to experience changes because in practice it is much easier to measure the intensity of a point at a specific wavelength that it is to see how a point varies in wavelength (or incident angle). Furthermore, as will be seen below, still a more advantageous way of carrying out the invention consists of enhancing the transduction function by multiplying it by this same intensity.

The response sensitivity (S) of the interferometer depends on the wavelength increase variation $\Delta\lambda$ in the curve $I_s(\lambda)$ shifted by the optical path variation. Sensitivity can generally be defined as

$$\text{Sensitivity}(S) = (\Delta\lambda)/(\Delta[C])$$

where [C] is the concentration of biomolecules for example in ng/mL or pg/mL. $\Delta[C]$ is equivalent to the optical path variation in the interferometric experiment.

The limit of detection (LoD) is defined as the minimum concentration of biomolecules that the system is capable of resolving (or the minimum optical path variation). LoD is a function of sensitivity and of uncertainty in the transduction signal. For example, if interrogated in $\lambda$, it can be calculated as:

$$\text{LoD} = U_c / S$$

where $U_c$ is the uncertainty in the observation of the transduction signal. $U_c$ is typically a function of the noise of the signal and of the resolution (in this case in $\lambda$), so the Limit of Detection therefore depends on the resolution and on the noise of the signal.

In this invention, it is novel that it is possible to operate with interferometric signals varying in wavelength (or in incident angle), these signals operate to improve sensitivity by improving the LoD since the $U_c$ is no longer dependent on the resolution in wavelength (or incident angle). This source of uncertainty is eliminated, and the LoD is therefore improved, in addition to simplifying the transduction methodology and the cost of carrying out said transduction.

The technical problem considered in the present invention is how to increase sensitivity and improve the limit of detection reducing complexity in the optical interferometric transduction process when determining the modification of a surface of the first substrate for any of the reasons causing a phase difference due to the accumulation of biological material, particularly by surface functionalization in the immobilization process or by the detection of biomolecules (4) recognized by means of the molecular receptors (3).

Additionally, the technical problem of being able to eliminate dispersive elements in wavelength (also in incident angle) in the transduction system is also considered to be able to operate interferometric signals to significantly reduce the optical reading mechanism.

First aspect of the invention

A first aspect of the invention combines two interferometric measurements (or signals modulated by an interferometer), a first interferometric measurement and a second interferometric measurement taken in either the same interferometer or in two equivalent interferometers, equivalent being understood in this particular case as obtaining the same interferometric response given the same input light beam and the same properties of the optical path leading to the interferometry phenomenon in the observation region in both interferometers.

In the case of taking two readings in the same interferometer, the readings cannot be taken simultaneously, whereas if two interferometers are used, it is possible to take both interferometric measurements simultaneously.

Both interferometric measurements are taken by applying excitation at the input of the interferometer with a light beam which is at least in a wavelength range $[\lambda_1,\lambda_2]$. The fact that the light beam is in a wavelength range $[\lambda_1,\lambda_2]$ must be interpreted to mean that when the interferometric measurement is taken, the beam is a polychromatic light beam containing all the wavelengths in the range $[\lambda_1,\lambda_2]$, where the interferometer is capable of providing an output $I_s(\lambda)$ for all values of the wavelength of said range, or that the light beam is monochromatic and the reading is taken in a very narrow wavelength range, or that it also varies throughout the range $[\lambda_1,\lambda_2]$ for obtaining a response $I_s(\lambda)$ at the output.

The result of the measurement is function $I_s(\lambda)$ defined in the range $[\lambda_1,\lambda_2]$. In fact, the notation $I_s(\lambda)$ will be used to identify the function $I_s$ as a wavelength-dependent function, and it will be written as $I_s[\lambda_1\lambda_2]$ when the variation range of its domain of definition is to be indicated in addition to indicating that the function is a function of the wavelength.

After taking the first measurement, a reference function denoted as $I_{ref}^{Interferometric}(\lambda)$, in this case,

$I_{ref}^{Interferometric}[\lambda_1, \lambda_2]$ is provided. This first measurement is taken on an observation region (R) on which no experiment that could lead to the modification of it surface has been conducted, hence referring to it as reference function. Nevertheless, in the case of applying the invention in the detection of molecules (4) using a functionalized surface, this reference measurement can alternatively be taken on the functionalized surface and not before functionalizing, where it will be interpreted that the surface has been modified because it can contain target molecules (4) (which are to be detected) recognized by the molecular receptors (3) of the functionalized surface.

The second measurement is taken on the observation region (R) of the modified interferometer. If the reference has been taken on the surface of the first substrate (5) without being functionalized, for example, then the second measurement is taken on the same surface once functionalized.

If the surface of the first substrate (5) has already been functionalized with the receptors (3), then the second measurement is taken after an experiment in which the sample in which the presence of the target molecule (4) is to be determined has been provided, the molecule (4) for which the surface of the first substrate (5) is functionalized. In this case it is also possible to take the non-functionalized surface of the first substrate (5) as a reference.

Likewise, if the existence or absence of the degree of coating of a specific substance on the surface of the first substrate (5) is to be assessed, the reference will be taken before applying the covering and the second measurement after applying the covering.

Function $I_{ref}^{Interferometric}[\lambda_1, \lambda_2]$ is obtained as a result of the first measurement and function $I_{out}^{Interferometric}[\lambda_1, \lambda_2]$ is obtained as a result of the second measurement.

The method according to this first aspect of the invention constructs a transduction function $f_{trans}$ resulting from the quotient of two interferometric functions

$$f_{trans}[\lambda_1, \lambda_2] = \frac{I_{out}^{Interferometric}[\lambda_1, \lambda_2]}{I_{ref}^{Interferometric}[\lambda_1, \lambda_2]}$$

One way of constructing this function is to define interferometric functions $I_{ref}^{Interferometric}[\lambda_1, \lambda_2]$ and $I_{out}^{Interferometric}[\lambda_1, \lambda_2]$ from the values measured in a discretization of their domain of definition. The quotient function will be the function formed by the discrete values resulting from taking the quotients corresponding to each discrete point of the domain for all those points in which the value of the denominator is non-zero.

Another way of constructing the quotient function is to construct an approach with an analytical expression for each function $(I_{ref}^{Interferometric}[\lambda_1, \lambda_2]$ and $I_{out}^{Interferometric}[\lambda_1, \lambda_2])$ and constructing the quotient of said analytical expressions. There are other alternatives such as the use of piecewise-defined functions, where what is relevant is obtaining a function.

Function $f_{trans}$ will have the same path in its domain of definition as at that of the functions from which it is constructed except those points where $I_{ref}^{Interferometric}[\lambda_1, \lambda_2]$ has zero values where the function is not defined. Nevertheless, these points are isolated points which do not prevent the later study of function $f_{trans}$ to determine the degree of change in the surface to be studied.

Although the sum of the light beams within the interferometer is an operation resulting from the physics modeling the behavior of two superimposed beams, in the invention the transfer function can be defined by means of a processing unit, for example a programmable processing unit, the numerical values stored in a memory unit.

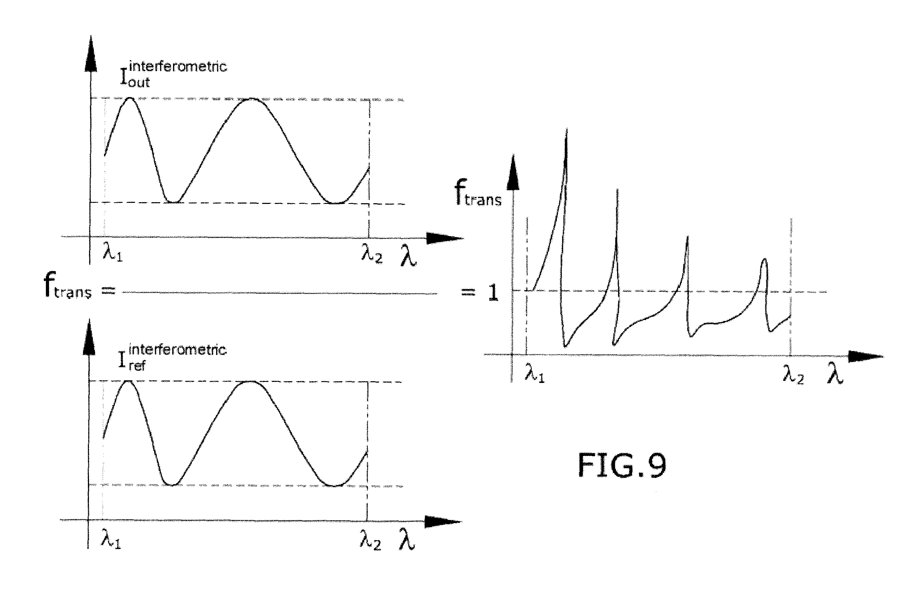

Figure 9 schematically shows the construction of function $f_{trans}[\lambda_1, \lambda_2]$ by means of the functions of the numerator and the denominator. The result is either the constant function having a value of 1 (when

$$I_{out}^{Interferometric}[\lambda_1, \lambda_2] = \qquad I_{ref}^{Interferometric}[\lambda_1, \lambda_2])$$ or a pulsed function such as that shown on the right.

As function $I_{out}^{Interferometric}[\lambda_1, \lambda_2]$ further separates from reference function $f_{trans}[\lambda_1,\lambda_2]$, the undulations are shown as a result of an increasingly larger expansion. In the case of the interferometer according to the embodiment used for the description of this invention and as a result of this larger expansion towards the right, the pulses of function $f_{trans}[\lambda_1,\lambda_2]$ also have greater amplitude.

Rather than assessing function $I_{out}^{Interferometric}[\lambda_1, \lambda_2]$, the invention assesses the changes in function $f_{trans}[\lambda_1,\lambda_2]$ to determine the degree of modification of the observation region (R).

Any of the following four measurement parameters on function $f_{trans}[\lambda_1,\lambda_2]$ is preferably used:

- the amplitude of one of the peaks of function $f_{trans}$, preferably that corresponding to the pulse having a smaller wavelength,
- the amplitude between two consecutive peaks of function $f_{trans}$, preferably in the area close to the origin where the distance between peaks has been experimentally proven to be greater,
- the change in slope in function $f_{trans}$ by a pre-established wavelength value; or
- the area under the curve variation $f_{trans}[\lambda_1,\lambda_2]$, where the range $[\lambda_a,\lambda_b]$ is a sub-range of $[\lambda_1,\lambda_2]$,

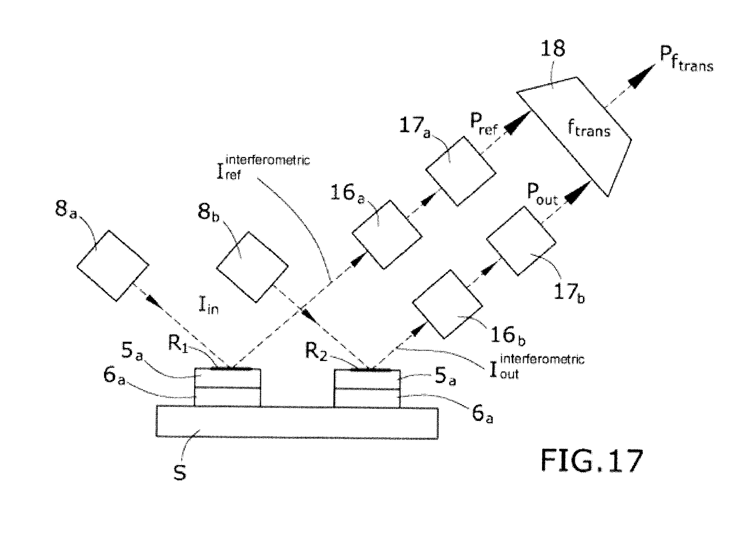

This last option is particularly interesting because it allows forming a reading system that uses function $f_{trans}[\lambda_1,\lambda_2]$ to convert the changes both in wavelength (and in incident angle according to another embodiment that will be described below) caused by the optical transduction into a unique optical intensity detection variable, eliminating the dispersive elements both in wavelength (and in incident angle) in the transduction system. In fact, the optical measurement system thus defined functioning as if its resolution in wavelength (or incident angle) were infinite, making the device ultra-compact, is considered equivalent. This embodiment will be described below with the aid of Figure 17.

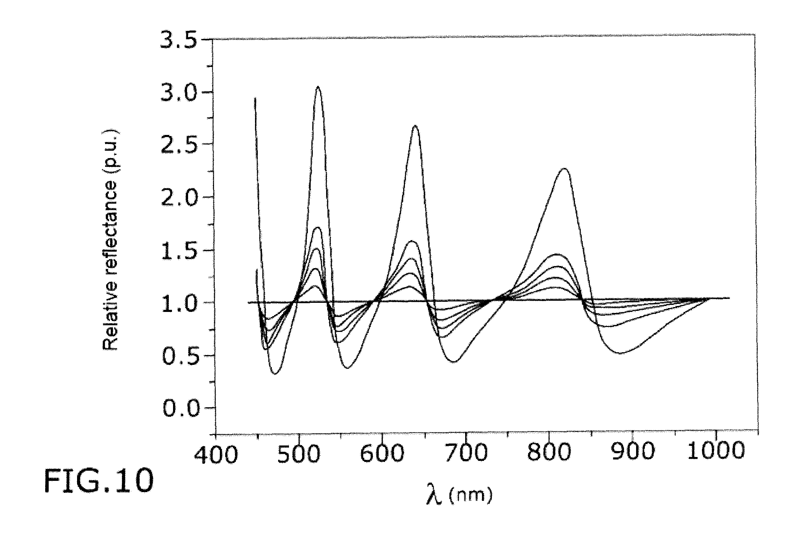

Figure 10 shows a transduction function $f_{trans}[\lambda_1,\lambda_2]$ obtained in a set of experiments conducted on an interferometer constructed for being used as a biosensor where the results correspond to sheets of biofilm with increasing thickness.

The response of the transduction function shows increasing peaks for experiments with increasing thicknesses in the form of pulses in which the flanks of said pulses in this particular case have specific, almost straight sectors of also increasing slope.

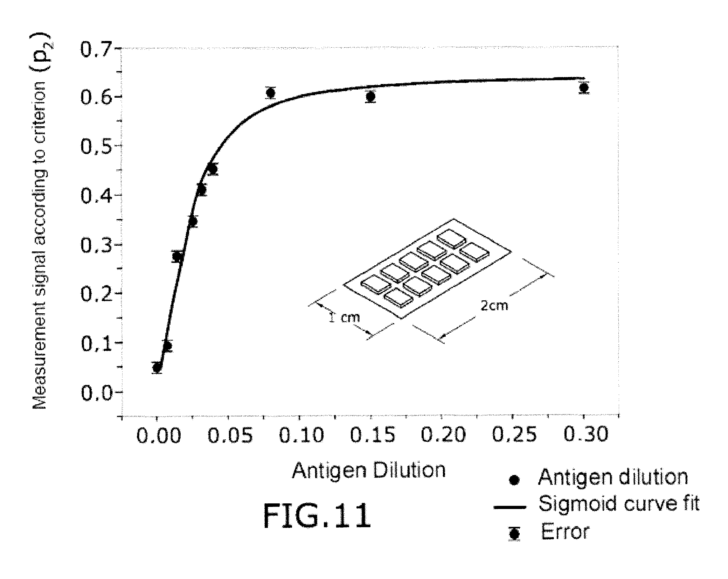

Figure 11 shows the amplitude between the first two peaks of the signal measured according to the invention depending on the thickness of the biofilm, i.e., the concentration of biomolecules (4) (an antigen) recognized by means of a receptor (3). Later this criterion for selecting the amplitude between the two peaks depending on the thickness will be identified, among others, as $p_2$, as seen on the y-axis. In view of this graph, it is experimentally proven that the response of the method according to the present invention is very close to having linear behavior and that the response of the signal is very high upon amplifying a small wavelength variation in a signal in amplitude that is easy to read and having higher sensitivity as well as a better limit of detection than that obtained directly by a single interferometer.

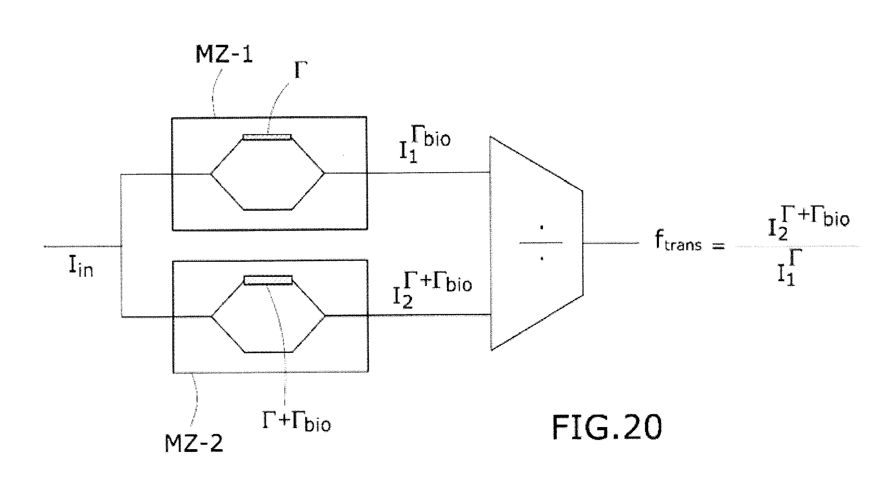

The clearest case can be observed in Figure 20, where the manufactured interferometer is a resonator having a high quality (Q) factor. A small variation in $\lambda$ is detectable as the resonance (or minimum) peak is very narrow, however the signal at the output by means of the transduction function generates a signal with a high amplitude that is easier to detect and with a higher sensitivity and better limit of detection that if a single interferometer (or resonator in this case) were used in which this shift in wavelength would be monitored.

It is also clearly shown in this specific case that in order to have a highly competitive limit of detection, it is necessary to have in the current state of the art a reading system having high resolution in $\lambda$. However, by means of the transduction function defined in this invention and by using the two readings as shown in Figure 17, where the optical measurement system thus deigned works as if its resolution in wavelength (or incident angle) were infinite, the limit of detection would be independent of the resolution in wavelength and the limit of detection would therefore be substantially improved with respect to the state of the art. The greater robustness and simplification of the measurement system thus defined is also clearly shown.

In addition to the sensitivity of the method, it has been experimentally found that significant and easily quantifiable signal values are obtained for thicknesses, even those less than a nanometer, making the method particularly suitable for detection, by means of direct label-free and amplification-free transduction biosensors, molecules that are hard to detect due to their low molecular weight by means of using a single interferometer.

It is also possible to use biochips formed by a plurality of biosensitive cells where an experiment (for example, incorporating the sample susceptible to carrying target molecules (4)) has not been conducted on one of the cells, and an experiment has been conducted on the remaining cells.

In this case, the cell that has not been used is the one that, according to one embodiment of the method of the invention, serves to take the measurement of the interferometric reference function $I_{ref}^{Interferometric}[\lambda_1, \lambda_2]$ and each of the other cells will lead to a different function $I_{out}^{Interferometric}[\lambda_1, \lambda_2]$. The quotient of each of these different functions $I_{out}^{Interferometric}[\lambda_1, \lambda_2]$ by the same $I_{ref}^{Interferometric}[\lambda_1, \lambda_2]$ will lead to a transduction function, which is also different for each cell, that will determine a signal level proportional to the concentration of target molecules (4) found.

Although the use of a Fabry-Perot interferometer has been described to understand the essential elements of the invention, it is possible to use interferometers of another type, such as the Mach-Zehnder interferometer described at the beginning of this invention, a Young interferometer, one based on resonating discs and rings, interferometric cells based on pillars and resonating pillars, etc.

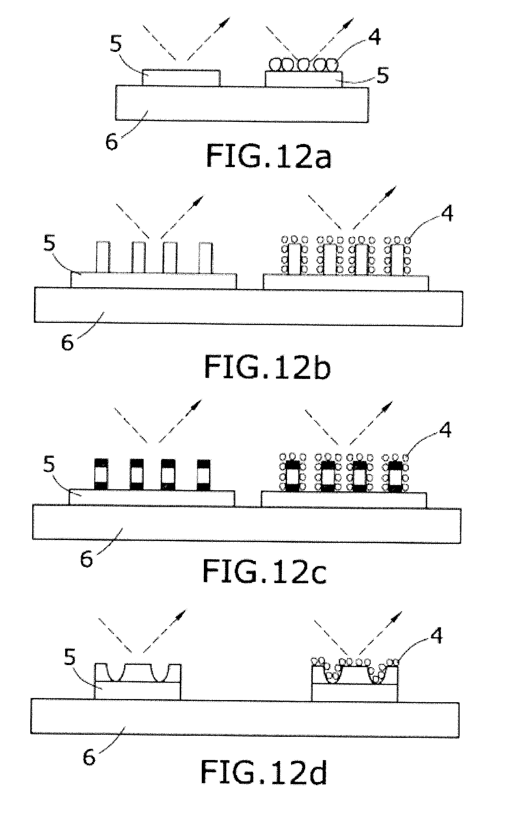

The sequence of Figures 12a-d shows different interferometric interrogation or vertical optical reading cells in observation regions (R) located on different types of interferometers.

Schematic Figure 12a shows the Fabry-Perot interferometer used in the description above. The two substrates (5, 6) with different refractive indices when the surface is functionalized but have not been used incorporating a sample susceptible to containing a content that is biologically reactive with the functionalized surface, i.e., capable of binding to the receptors (3), are shown on the left. In any of Figures 12a to 12d, though there are receptors, they have not been depicted to simplify the graphic depiction.

The right side of Figure 12a schematically shows the same surface on which molecules (4) have been fixed, increasing the height and modifying the refractive index. Only thick circular points have been used in this schematic depiction to identify the presence of molecules (4) fixed on the functionalized surface.

Figure 12b incorporates a set of pillars, for example with a cylindrical section, on the first substrate (5) the surface of which is functionalized. The same support with the molecules (4) fixed on the functionalized surface is shown on the right. One of the advantages of this construction is the increase in functionalized surface per unit of area of the substrate (5) and therefore a higher capacity to capture molecules (4) capable of binding to the receptors (3). This configuration increases the signal of the interferometer.

Figure 12c changes the type of interferometer for a Fabry-Perot interferometer where the pillars are resonators. These resonators are depicted by pillars having reflective surfaces at the upper and lower bases identified with a thick line between which the resonance phenomenon can take place. As in the case shown in Figure 12b, the outer surface of the pillars is functionalized; nevertheless, unlike this same embodiment shown in Figure 12b, in this embodiment the change in signal occurs primarily due to the interaction of the evanescent field on the side surfaces (vertically arranged according to the orientation shown in the figure) of the resonating pillars. As in the cases shown in Figures 12a-b, this embodiment of the invention, uses the signal $I_{out}[\lambda_1, \lambda_2]$ taken after conducting the experiment in the observation region, and signal $I_{ref}[\lambda_1, \lambda_2]$ for constructing the transduction function $f_{trans}$, and the latter determining the concentration of molecules fixed in the receptors of the functionalized surface.

Figure 12d is another embodiment where the surface is not planar but adopts a corrugated configuration to increase the surface per unit of horizontal area (also according to the orientation shown in the figure).

The preceding examples shown in Figure 12a-d relate to interferometric interrogation or vertical optical reading cells. However, the present invention can be applied to any device using an interferometer or resonator as a biosensor element, such as those described in the state of the art in planar technology, i.e., where the input beam towards the interferometer is done through waveguides built on a chip, and where the reading is done through other output waveguides of the chip.

Examples of devices of this type are, for example, Mach-Zehnder interferometers such as that described in Figure 1, Young interferometers, resonating discs and rings, etc. The method is applied in the same manner as that described in this invention, using one of these interferometers as a reference and obtaining the transduction function from the output signal obtained in the interferometer that has been subjected to an accumulation of biological material in its sensitive surface.

The invention using planar technology will be described below in relation to Figure 20.

Example of device for implementing the detection method

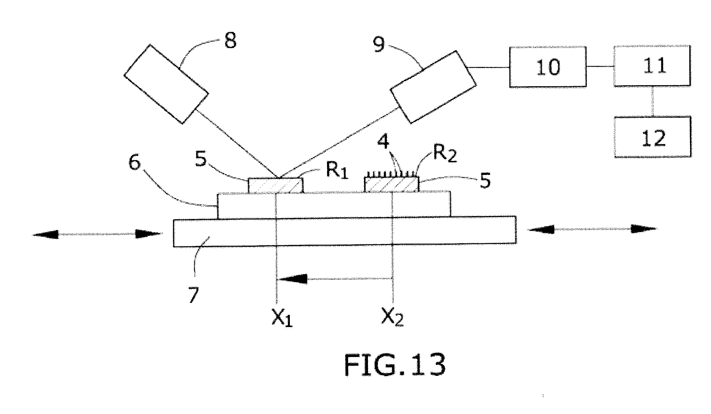

Figure 13 shows an embodiment of a device suitable for carrying out a method according to the first aspect of the invention. This device is formed by a positioning table (7) on which there are two substrates forming an interferometer, a first substrate (5) with the free upper surface arranged on a second substrate (6), which is located on the positioning table (7). Substrate (5) and substrate (6) have different refractive indices ($n_1$, $n_2$).

The first substrate (5) is split into two regions, a first region ($R_1$) on which an experiment susceptible to modifying its surface has not been conducted; and a second region ($R_2$) on which an experiment susceptible to modifying its surface has been conducted. For example, the first region ($R_1$) is functionalized and the second region ($R_2$), also functionalized, has been exposed to a biological sample to be analyzed to check whether it contains a target molecule (4). As a result, an accumulation of molecules (4) recognized by the receptors is shown.

A light emitter (8) emitting an incident beam in the first region ($R_1$), generating an interferometry experiment in the interferometer formed by the two substrates (5, 6) and analyzed by a spectrometer (9), is shown above on the left side according to the orientation of the figure. The spectrometer (9) detects the interferometric signal depending on the

wavelength ($\lambda$) and provides function $I_{ref}^{Interferometric}(\lambda)$ which is stored in a memory unit (10) managed by a central processing unit (12).

After taking this first reading, the positioning table (7) horizontally shifts the substrates (5, 6) forming the interferometer from position $X_1$ to position $X_2$, such that now the incident beam coming from the light emitter (8) strikes the second region ($R_2$). When the light beam strikes the second region ($R_2$), an interferometric signal is obtained and is again analyzed by the spectrometer (9) which in turn provides function $I_{out}^{Interferometric}(\lambda)$. .

This second function $I_{out}^{Interferometric}(\lambda)$ is also stored in the memory unit (10) such that both function

$I_{ref}^{Interferometric}(\lambda)$ and function $I_{out}^{Interferometric}(\lambda)$ can be accessed by the central processing unit (12).

The same scheme of Figure 13 shows an operator (11) accessing the memory unit (10) and responsible for taking the reading of both functions $I_{ref}^{Interferométrica}(\lambda)$ and $I_{out}^{Interferométrica}(\lambda)$, generating the trans-

duction function

$$f_{trans}[\lambda_1, \lambda_2] = \frac{I_{out}^{Interferometric}[\lambda_1, \lambda_2]}{I_{ref}^{Interferometric}[\lambda_1, \lambda_2]}$$

Even though this operation has been made independent by means of an operator formed by a physical element, it can be performed by means of the central processing unit (12). Likewise, the memory unit (10), the operator (11) and the central processing unit (12) can be manufactured in a single device as in the case of an application-specific integrated circuit (ASIC).

By means of software, the device of this embodiment has implemented therein four particular ways of assessing the transduction function variation with respect to the unit function that can be selected by means of a display screen showing a menu:

- ($p_1$) the amplitude of one of the peaks of function $f_{trans}$, preferably corresponding to the smaller wavelength,
- ($p_2$) the amplitude between two consecutive peaks of function $f_{trans}$,
- ($p_3$) the change in slope $\alpha$ in function $f_{trans}$ by a pre-established wavelength value; or,
- ($p_4$) the area under the curve variation $f_{trans}[\lambda_a, \lambda_b]$ where the range $[\lambda_a, \lambda_b]$ is a sub-range of $[\lambda_1, \lambda_2]$,

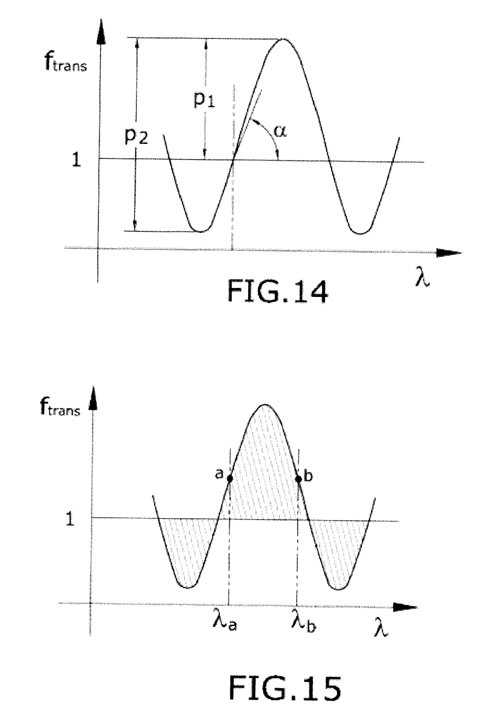

Figure 14 shows the reference values used in each of the first three measurement parameters that can be selected and Figure 15 shows the area under the curve variation $f_{trans}[\lambda_a, \lambda_b]$ where in this case it has been referenced to the value of 1:

$$p_4 = \left( \int_{\lambda_a}^{\lambda_b} f_{trans}(\xi) d\xi \right) - 1$$

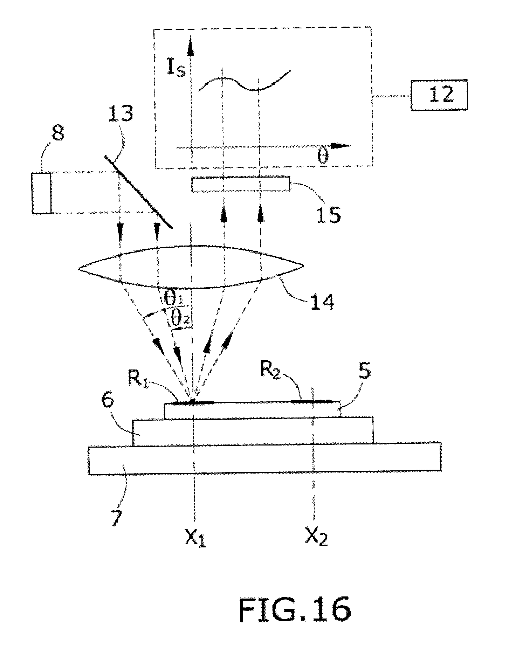

Figure 16 shows a second embodiment of the device which is suitable for performing detection according to the first aspect of the invention.

In this device, as in the preceding embodiment, the interferometer is formed by a positioning table (7) on which a first and a second substrate (5, 6) rest, the first substrate (5) located on the second substrate (6) and the latter in turn on the positioning table (7).

The first substrate (5) is split into two different observation regions $(R_1, R_2)$.

This device shows a monochromatic light emitter (8) emitting a light beam reaching a beam splitter (13) redirecting the light to a lens with a high numerical aperture (14) for obtaining large angular dispersion.

The beam in turn has beams striking the lens (14) close to its optical axis and beams striking far from its optical axis. Although the lens (14) is located such that the beams are focused in the same point of the observation region (R) of the interferometer, the beams coming out of the light splitter (13) close to the axis strike with an incident angle $(\theta_2)$ with respect to the optical axis that is smaller than the incident angle $(\theta_1)$ of the beams coming out of the splitter (13) far from the optical axis.

As shown in Figure 16, in a first position $X_1$ of the positioning table (7), the lens (14) converges the light beam on the first observation region $(R_1)$.

The beams coming out of the interferometer also come out with a specific angle until reaching the lens (14) on its symmetrically opposite side such that, after surpassing the lens (14), they are propagated parallel to the first incident beams coming out of the beam splitter (13) until reaching an array sensor (15).

The array sensor (15) receives the interferometric signal in a different place, depending on the incident angle $(\theta)$.

In this embodiment, the incident angle variation is equivalent to varying the wavelength $\lambda$ so it is possible to either work with function $I_{out}^{Interferometric}(\lambda)$ or $I_{out}^{Interferometric}(\theta)$. .

After obtaining any of the two intensity functions carrying out the interrogation of the first observation region $(R_1)$ in position $X_1$, the positioning table (7) is shifted to position $X_2$.

In this second position $X_2$, the optical axis of the lens (14) is matched up with the second observation region $(R_2)$ corresponding to the interferometer on which a sample to be analyzed to determine the presence and concentration of a specific biological material susceptible to reacting with the surface functionalized by means of receptors has been deposited.

The figure shows molecules (4) that have been fixed to the receptors which modify the refractive index of the first substrate (5).

The same light beam coming out of the light emitter (8) will follow the same path described except now the interrogated region is the second observation region $(R_2)$, and therefore the reconstructed intensity function will correspond to the new refractive index.

The first and second readings of the intensity depending on the incident angle are read by a central processing unit (12) which in this case is responsible for receiving both functions and generating the transfer function. In this case the transfer function can be expressed as:

$$f_{trans}(\theta) = \frac{I_{out}^{Interferometric}(\theta)}{I_{ref}^{Interferometric}(\theta)}$$

where $I_{ref}(\theta)$ is the function constructed from the first reading, $I_{out}^{Interferometric}(\theta)$ is the function constructed from the second reading and $f_{trans}(\theta)$ is the function constructed from the quotient of both.

It is possible to modify the wavelength, inclination or both in a monochromatic light beam striking an interferometer. Nevertheless, the modification of the incident angle has the same effect as modifying the wavelength.

Therefore, it is possible to establish a relation between the change in incident angle with the wavelength variation such that a single parameter is sufficient for characterizing the response. Hence the intensity is expressed as either

$I_{out}^{Interferometric}(\theta)$ or $\text{I}_{\text{out}}^{Interferometric}(\lambda)$ given that they are equivalent forms of representing the interferometric response.

General example of a device for implementing the detection method

Figure 17 shows an embodiment of the invention for detection which does not need to use dispersive elements either in wavelength or in angle. In fact, this embodiment of the invention allows the optical reading system to convert the changes in wavelength (as well as in incident angle) caused by the optical transduction of the interferometers into a unique variable detection. In this embodiment, it is considered that the optical measurement system thus designed works in a manner equivalent to if its resolution in wavelength were infinite.

In this embodiment, the scheme uses an interferometric reflection experiment though a transmission experiment could nevertheless also be performed.

The device according to this embodiment comprises a substrate (S) on which there are arranged at least two interferometric cells (alternatively they could also be resonating cells preferably having a high quality (Q) factor) formed by a first substrate (5a, 5b) and a second substrate (6a, 6b). One cell (5a, 6a) is the reference cell and the other cell (5b, 6b) is the detection cell.

Each of the cells has a light emitter (8a, 8b) which makes light strike its observation region ($R_1$, $R_2$).

As in the preceding examples, a first interferometric reference measurement is taken in a wavelength range $[\lambda_a, \lambda_b]$. . For this purpose, a beam $I_{in}$ from the first light source (8a) strikes the interferometric reference cell (5a, 6a) the output of which is a signal $I_{ref}^{Interferometric}(\lambda)$ which passes through a filter (16a) for limiting the spectral interrogation range. This spectral range could be limited either by means of the selection of the light source (16a, 16b) or by incorporating a filter at the output of the light source (16a, 16b), or even by using a monochromatic or quasi-monochromatic light source (16a, 16b).

The light beams have been depicted by means of dotted lines and the electric signals by means of continuous lines.

The signal $I_{ref}^{Interferometric}(\lambda)$ is converted by means of a radiation detector (17a) (for example a photodiode) into a reference electric signal $P_{ref}$ from the optical signal $I_{ref}^{Interferometric}(\lambda)$ modulated by the reference interferometer (5a, 6a).

A second measurement is taken in at least the same wavelength range $[\lambda_a, \lambda_b]$. In this case, the use of a second light emitter (8b) is described although it is also possible to use either the same light emitter (8a), splitting it into two beams, performing a shift so that the beam of the first light emitter (8a) strikes the second observation region ($R_2$). In this second case the readings could not be taken simultaneously.

In any of the cases, an output $I_{out}^{Interferometric}(\lambda)$ reaching a second filter (16b) selected with the same spectral range as the first filter (16a) is obtained.

After the signal $I_{out}^{Interferometric}(\lambda)$ is filtered, it is converted by means of a second radiation detector (17b) into an electric detection signal $P_{ref}$ from the filtered optical signal $I_{out}^{Interferometric}(\lambda)$ that was previously

modulated by the detection interferometer (5b, 6b) in which a sample has been incorporated to determine whether it contains a specific target molecule. As indicated at the beginning of the embodiment, every time "interferometer" is mentioned, it is understood that the use of resonators is possible.

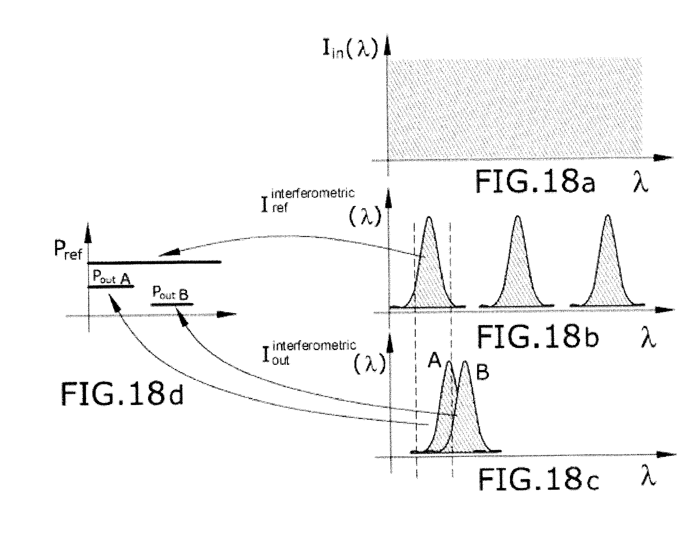

Figure 18a shows the emission $I_{in}(\lambda)$ of light from the first emitter (8a). When $I_{in}(\lambda)$ interacts with the interferometric or resonating reference cell, the light at the output is modulated by the optical response of the interferometer or resonator, obtaining the signal $I_{ref}^{Interferometric}(\lambda)$.

For the sake of simplicity, an interferometer the optical response of which in the reference cell is like that shown in Figure 18b has been considered. Nevertheless, any interferometric signal like that described in this invention (for example, that shown in Figure 3) is also possible.

As the wavelength is limited by means of a filter (16a, 16b), a spectral observation area in the range $[\lambda_a, \lambda_b]$ is selected as shown in Figures 18b and 18c, where the reference signal $I_{ref}^{Interferometric}(\lambda)$ is converted into an electric signal with maximum power.

However, when the spectral response of the detection cell (5b, 6b) is modified due to the accumulation of biomolecules either in the bioreceptor immobilization process or in the target molecule recognition process, its optical response varies as can be seen in the depiction of $I_{out}^{Interferometric}(\lambda)$ in Figure 18c. Two example situations have been depicted in this figure and in Figure 18b:

- (A) corresponding to when the signal modulated by the detection cell (5b, 6b) shifts in $\lambda$ by a quantity, for example, equal to half the observation range $((\lambda_2-\lambda_1)/2)$, where the signal $P_{out}$ calculated as the value of the area under the curve $I_{out}^{Interferometric}(\lambda)$ in the range $[\lambda_a, \lambda_b]$ is half the value of the signal $P_{ref}$ also calculated as the value of the area under its curve $I_{ref}^{Interferometric}(\lambda)$ in the same range; and,

- (B) when this shift in $\lambda$ makes the signal $P_{out}$ in the observation range much smaller.

Obtaining the signal $P_{ref}$ and $P_{out}$ calculated as the value of the integral in $\lambda$ under the curve of its corresponding intensity function used in this embodiment corresponds to the particular criterion ($p_4$), the use of any of the other criteria being possible.

When a criterion such as ($p_1$) or ($p_2$) in which only isolated values of $I_{ref}^{Interferometric}(\lambda)$ and of $I_{out}^{Interferometric}(\lambda)$ are required, is used, it is also necessary to know $I_{ref}^{Interferometric}(\lambda)$ and $I_{out}^{Interferometric}(\lambda)$ in the entire range $[\lambda_a, \lambda_b]$ as well as the transduction function $f_{trans}$ constructed from them. This is true at least when designing the experiment. The values where the peaks, maxima or minima of the function, are produced are only known when the behavior of the functions in a range is known. Once the location of the point where the values where the transduction function $f_{trans}$ has a response to the changes in $I_{out}^{Interferometric}(\lambda)$ with respect to $I_{ref}^{Interferometric}(\lambda)$ is known, it is possible to assess the transduction function $f_{trans}$ only at a specific value of .

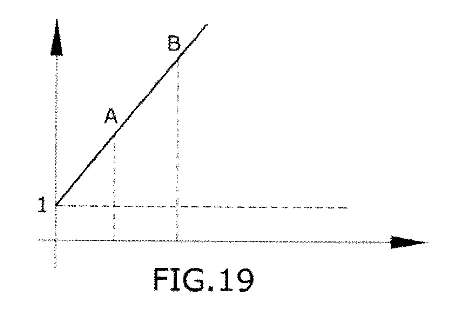

This situation can be seen in Figure 18d, where these possibilities have been schematically depicted. Once it is seen that $P_{out}$ is a transformation of the signal $I_{out}^{Interferometric}(\lambda)$ modulated by the interferometer in wavelength but where there is no limitation by resolution in $\lambda$ in the equipment (it could be considered as if the system operated with infinite resolution in $\lambda$ ), $P_{ref}$ and $P_{out}$ operate by means of the transduction function $f_{trans}$ for obtaining the response curve of the biosensor shown in Figure 19.

The good thing about this transduction methodology is that on one hand it allows forming much more compact and less expensive optical reading systems in which their limit of detection does not depend on the resolution of dispersive elements but on the signal/noise ratio in converting optical intensity into power or electric signal.

It should be stressed that the system could be constructed to obtain signals modulated by the interferometric or resonating cells either in reflection such as that described or in transmission.

Use of planar technology

Although the preceding examples are based on vertical interrogation to simplify the measurement system, it is possible to carry out the invention using optical devices integrated in planar technology being interrogated by means of optical waveguides.

Figure 20 shows an operating scheme based on two Mach-Zehnder interferometers, a first interferometer identified as MZ-1 and a second interferometer identified as MZ-2. Both interferometers are integrated in planar technology and are interrogated by means of optical waveguides.

Both interferometers (MZ-1, MZ-2) are supplied from the same light source ($I_{in}$). A reference output $I_1^{\Gamma}$ resulting from obtaining an interferometric signal modulated by said interferometer without modifying its observation region is obtained from the first interferometer (MZ-1). The sample leading to an output $I_1^{\Gamma + \Gamma_{bio}}$ modulated by said second interferometer (MZ-2) resulting from the changes in the optical path caused by the presence of the sample is incorporated in the observation region of the second interferometer (MZ-2).

In this embodiment, these signals are measured by means of a sensor which allows reconstructing numerical values which allow representing in a central processing unit two functions to that this same central processing unit can obtain $f_{trans}$ as shown in the figure. The behavior of the transfer function $f_{trans}$ determines the detection in the observation region in the second interferometer (MZ-2) according to the criteria and methods already described in any of the other methods of this description.

Figure 20 schematically shows both interferometers within their cases and supplied by the same light source. According to one embodiment, this scheme is implemented such that both interferometers are located in the same device.

Nevertheless, a person skilled in the art would easily implement other ways of carrying out the invention, for example using a plurality of interferometers: a first interferometer that would conduct an interferometric experiment to obtain a reference signal modulated by said interferometer $I_1^{\Gamma}$, and the remaining second interferometers, with an observation region for conducting experiments incorporating a sample for being measured such that each of these second interferometers different from the reference interferometer provide a modulated interferometric signal $I_1^{\Gamma + \Gamma_{bio}}$ that is compared with the signal of the first interferometer $I_1^{\Gamma}$, as described in the invention, to obtain a different transfer function $f_{trans}$ for each of the second interferometers that is intended for being used to perform detection on each of such second interferometers.

This particular way of taking the measurement allows conducting a plurality of interferometric experiments in parallel simultaneously.

A person skilled in the art would also carry out the same invention using other planar technologies, for example incorporating interferometers such as those using resonating rings.

Use of more complex transduction functions

The invention uses a transduction function $f_{trans}$ resulting from the quotient

$$f_{trans}[\lambda_1, \lambda_2] = \frac{I_{out}^{Interferometric}[\lambda_1, \lambda_2]}{I_{ref}^{Interferometric}[\lambda_1, \lambda_2]}$$

i.e., it is an operation that assesses the quotient between two specific functions determined by the optical path variation $\Gamma$ generated between a reference signal without modification of the observation region, for example because there was no biological accumulation, and another one in which the optical path $\Gamma$ because it has been modified, for example by biological material accumulation (immobilization and recognition).

Although the simple quotient leads to a transduction function which allows increasing the sensitivity in detection, it is possible to construct more complex functions resulting from constructing a composition of functions from this simpler transduction function.

Function $F(f_{trans}(\lambda))$ has been found to be particularly sensitive, having a composition which can be expressed as

$$F\big(f_{trans}(\lambda)\big) = I_{out}^{Interferometric}(\lambda) \frac{(f_{trans}(\lambda) - 1)^2}{f_{trans}(\lambda)} + 1$$

which can also be expressed as $F\big(f_{trans}(\lambda)\big) = 1 + \dfrac{\big(I_{out}(\lambda) - I_{ref}(\lambda)\big)^2}{I_{ref}(\lambda)}.$

In this case, the transduction function $f_{trans}(\lambda)$ is enhanced by function $I_{out}(\lambda)$ leading to a function the response of which was particularly sensitive to the changes in the detection region.

**Claims**

1. An interferometric detection method comprising the following steps:

   a) taking a first interferometric measurement by means of an interferometer in turn comprising an observation region, where said interferometer is suitable for receiving an input light beam and provides an output beam resulting from interrogating the observation region, where said first interferometric measurement is taken by exciting the interferometer with a light beam which is at least in a wavelength range $[\lambda_1, \lambda_2]$,

   b) characterizing the observation region of the interferometer by means of a function $I_{ref}^{Interferometric}[\lambda_1, \lambda_2]$, which represents the measured intensity modulated by the reference interferometer, or in other words, which represents the output of the interferometer as a function of the exciting light beam wavelength,
   c) conducting an experiment susceptible to modifying the observation region or on the observation region of the interferometer used in the first measurement or on a second observation region interferometrically equivalent to the first observation region,
   d) taking a second interferometric measurement by characterizing the modified observation region of the interferometer during the experiment by means of a function $I_{out}^{Interferometric}[\lambda_1, \lambda_2]$, which represents the measured intensity modulated by the interferometer at the output of the interferometer as a function of the exciting light beam wavelength, where in this second interferometric measurement the exciting light beam shows the same spectrum as the exciting light used in the first measurement in at least the wavelength range $[\lambda_1, \lambda_2]$,
   e) constructing a transduction function $f_{trans}$ resulting from the quotient

$$f_{trans}[\lambda_1, \lambda_2] = \frac{I_{out}^{Interferometric}[\lambda_1, \lambda_2]}{I_{ref}^{Interferometric}[\lambda_1, \lambda_2]}$$

   f) establishing a measurement parameter on function $f_{trans}$ to determine the degree of modification of the observation region, preferably among the following:

   ○ the amplitude of one of the peaks of function $f_{trans}$, preferably corresponding to the smaller wavelength,
   ○ the amplitude between two consecutive peaks of function $f_{trans}$,
   ○ the change in slope in function $f_{trans}$ by a pre-established wavelength value; or,
   ○ the variation of the area under the curve $f_{trans}[\lambda_a, \lambda_b]$, where the range $[\lambda_a, \lambda_b]$ is a sub-range of $[\lambda_1, \lambda_2]$,

   g) providing the value of the measurement parameter measured on function $f_{trans}$ obtained in step f).

2. The method according to claim 1, **characterized in that**:

   • there is provided one or more second interferometers in turn comprising an observation region suitable for receiving an input light beam and providing an output beam resulting from interrogating the observation region carrying out an interference process, where this second interferometer and its observation region is equivalent to the first, i.e., given the same light beam conditions for exciting the interferometer and the same observation region conditions provides the same wavelength-dependent intensity as the first interferometer,

• the characterization of the observation region of the interferometer by means of a function $I_{ref}^{Interferometric}[\lambda_1, \lambda_2]$ according to step c) is carried out in the first interferometer,

• the experiment on the observation region of the interferometer susceptible to modifying the surface of the observation region according to step d) is conducted in each of the second interferometers, the observation region being **characterized in** these same second interferometers according to step d) after the experiment by means of function $I_{out}^{Interferometric}[\lambda_1, \lambda_2]$, which represents the intensity measured at the output of each of the second interferometers depending on the wavelength of the exciting light beam,

• steps f) and g) are carried out for each second interferometer.

**3.** The method according to claim 1 or 2, **characterized in that** the measurement parameter measured on function $f_{trans}[\lambda_1,\lambda_2]$ uses an auxiliary function $F(x)$ such that said parameter takes measurements on composition of functions

$$(F^\circ f_{trans})(\lambda) = F\big(f_{trans}(\lambda)\big)$$

**4.** The method according to claim 3, **characterized in that** composition of functions $F(f_{trans}(\lambda))$ is

$$F\big(f_{trans}(\lambda)\big) = I_{out}^{Interferometric}(\lambda)\frac{(f_{trans}(\lambda)-1)^2}{f_{trans}(\lambda)} + 1$$

which can also be expressed as

$$F\big(f_{trans}(\lambda)\big) = 1 + \frac{\left(I_{out}^{Interferometric}(\lambda) - I_{ref}^{Interferometric}(\lambda)\right)^2}{I_{ref}^{Interferometric}(\lambda)}$$

**5.** The method according to claim 1 or 2, **characterized in that** the interferometer or the interferometers are resonators.

**6.** The method according to any of the preceding claims, wherein the interferometer comprises:

• a lens with a large aperture suitable so that the incident light beam interrogating the observation region does it simultaneously at a specific inclination range,
• an image sensor suitable for capturing in different points of the sensor the light coming from the beam, after passing through the observation region, depending on the incident angle in the observation region;

where

• there is provided a function $I(\theta)$ by measuring the intensity in the sensor corresponding to each value of the inclination of incidence in the observation region,
• there is established a bijection $\lambda=\lambda(\theta)$ linking $\lambda$ and $\theta$,

• functions $I_{ref}^{Interferometric}(\theta)$ and $I_{out}^{Interferometric}(\theta)$ are expressed as

$$I_{ref}^{Interferometric}(\lambda) \text{ and } I_{out}^{Interferometric}(\lambda) \text{ for being used in step f).}$$

7. The method according to any of claims 1 to 6, **characterized in that** the modification of the observation region (R) of the interferometer is a functionalization step for functionalizing the surface of said observation region (R) by incorporating molecular receptors (3), and where the measurement leading to characterization

$I_{ref}^{Interferometric}(\lambda)$ is carried out before functionalization step and the measurement leading to character-

ization $I_{out}^{Interferometric}(\lambda)$ is carried out thereafter.

8. The method according to any of claims 1 to 6, **characterized in that** the modification of the observation region of the interferometer comprises a step of incorporating a sample susceptible to incorporating target molecules (4) on a surface functionalized with molecular receptors (3) susceptible to recognizing said target molecule (4), and, where the measurement leading to characterization $I_{ref}^{Interferometric}(\lambda)$ is carried out before incorporating the sample in the observation region (R), and the measurement leading to characterization $I_{out}^{Interferometric}(\lambda)$ is carried

out after incorporating a sample susceptible to incorporating molecules (4) corresponding to the molecular receptors (3).

9. A device comprises:

   • an interferometer comprising at least one observation region (R),
   • a light emitter suitable for emitting a light beam striking the observation region (R),
   • reading means for reading the output light beam of the interferometer suitable for providing the interferometric signal $I(\lambda)$,
   • storage means for storing the interferometric signal in a wavelength range,
   • a central processing unit suitable for carrying out a method according to any of the preceding claims.

10. The device according to claim 9, **characterized in that** it has one or more second interferometers wherein each of them comprises at least one second observation region (R) equivalent to the first.

11. The device according to claims 9 or 10, **characterized in that** the reading means have filters for limiting the wavelength range of the light received.

12. The device according to any of claims 10 to 11, **characterized in that** it has a movable support suitable for placing either the first interferometer or the second interferometer under the light beam from the light emitter.

13. The device according to any of the preceding claims, **characterized in that** it additionally comprises:

   • a lens with a high numerical aperture the focus of which is located on the observation region (R),
   • the light beam is suitable for striking in a range of lens diameters which are in turn deviated towards the observation region according to different incident angles; and where the output light beams pass through the lens to reach the reading means,
   • the reading means for reading the output light beam of the interferometer is suitable for receiving the output light corresponding to different incident angles on the observation region (R) in a differentiated manner.

FIG. 1

STATE OF THE ART

$I_S(\lambda)$

$\lambda$

FIG.3

FIG.2a

E

$E_1$

$E_2$

ωt

FIG.2b

E

$E_2$

$E_1$

ωt

FIG.2c

E

$E_1$

$E_2$

ωt

Γ

STATE OF THE ART

$E_{in}$

$H_1$

$H_{in}$

$H_2$

$\theta$

5

$n_1$

$L_1$

$n_2$

6

**FIG.4**

STATE OF THE ART

3

$\Delta_r$

5

$n_1$

L

$n_2$

1

6

**FIG.5**

STATE OF THE ART

4

$\Delta_b$

$\Delta_r$

5

$n_1$

$L_1$

$n_2$

6

**FIG.6**

FIG.7

FIG.8

$I_{out}^{interferometric}$

$f_{trans} = $ _____ $= 1$

$I_{ref}^{interferometric}$

$f_{trans}$

FIG.9

FIG.10

FIG.11

FIG.12a

FIG.12b

FIG.12c

FIG.12d

FIG.13

FIG.14

FIG.15

FIG.16

FIG.17

EP 2 693 164 A1

$I_{in}(\lambda)$

FIG.18a $\lambda$

$I_{ref}^{interferometric}(\lambda)$

$P_{ref}$

$P_{out\ A}$

$P_{out\ B}$

FIG.18b $\lambda$

$I_{out}^{interferometric}(\lambda)$

A B

FIG.18d

FIG.18c $\lambda$

FIG.19

$$f_{trans} = \frac{I_2^{\Gamma+\Gamma_{bio}}}{I_1^{\Gamma}}$$

$I_1^{\Gamma_{bio}}$

$I_2^{\Gamma+\Gamma_{bio}}$

MZ-1

$\Gamma$

MZ-2

$\Gamma+\Gamma_{bio}$

$I_{in}$

FIG.20

Europäisches
Patentamt
European
Patent Office
Office européen
des brevets

# EUROPEAN SEARCH REPORT

**Application Number**

EP 12 38 2317

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | S. VERGNOLE ET AL: "Common path swept-source OCT interferometer with artifact removal", PROCEEDINGS OF SPIE, vol. 6847, 1 January 2008 (2008-01-01), pages 68472W-68472W-8, XP055008487, ISSN: 0277-786X, DOI: 10.1117/12.761836 * abstract, chapter 2 * | 1-13 | INV. G01B9/02 G01N21/45 |
| A | PHILIP C. D. HOBBS: "Ultrasensitive laser measurements without tears", APPLIED OPTICS, vol. 36, no. 4, 1 February 1997 (1997-02-01), - 1 February 1997 (1997-02-01), pages 903-920, XP002690225, * the whole document * | 1-13 | |

**TECHNICAL FIELDS SEARCHED (IPC)**

G01B
G01N

The present search report has been drawn up for all claims

| Place of search | Date of completion of the search | Examiner |
|---|---|---|
| Munich | 17 January 2013 | Malcoci, Andrei |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)